# EUROPEAN PATENT SPECIFICATION

(11) **EP 4 090 499 B1**
(45) Date of publication and mention of the grant of the patent: **20.12.2023**
(21) Application number: 21703978.3
(22) Date of filing: 12.01.2021
(51) Int. Cl.: B25J 9/00, B25J 13/08

(54) **ROBOTIC ARRANGEMENT WITH PARALLEL ARCHITECTURE**
ROBOTERANORDNUNG MIT PARALLELER ARCHITEKTUR
SYSTÈME ROBOTIQUE À ARCHITECTURE PARALLÈLE

(30) Priority: 13.01.2020 IT 202000000478
(43) Date of publication of application: 23.11.2022
(73) Proprietor: Alma Mater Studiorum - Universita' Di Bologna, 40126 Bologna (IT)
(72) Inventor: CARRICATO, Marco, 40134 Bologna (BO) (IT); IDA', Edoardo, 40138 Bologna (BO) (IT); MATTIONI, Valentina, 65123 Pescara (PE) (IT); VINCENZI, Sara, 47043 Gatteo (FC) (IT); TIZI, Giulia, 72017 Ostuni (BR) (IT)
(74) Representative: Crovini, Giorgio
(86) International application number: PCT/IB2021/050185
(87) International publication number: WO 2021/144685

(56) References cited:
- WO-A1-2019/241690
- DE-A1-102010 015 530
- KRAUS WERNER ET AL: "Pulley friction compensation for winch-integrated cable force measurement and verification on a cable-driven parallel robot", 2015 IEEE INTERNATIONAL CONFERENCE ON ROBOTICS AND AUTOMATION (ICRA), IEEE, 26 May 2015 (2015-05-26), pages 1627-1632, XP033168620, DOI: 10.1109/ICRA.2015.7139406

## Description

### Technical field

The present description relates to a robotic arrangement with parallel architecture, comprising a frame and an end effector mounted on a mobile support, in particular a mobile platform, said mobile support being connected to said frame via a plurality of actuation cables, in particular four actuation cables, in such a way as to move according to two degrees of freedom in a rectangular plane movement space, said robotic arrangement comprising a plurality of actuators for moving respective actuation cables, said actuators being in a number greater than said degrees of freedom of the end effector,
each actuation cable coupling a respective portion of said frame and a respective portion of said mobile support according to a loop path between at least two proximal anchorage points associated to the frame and two distal anchorage points associated to the frame.

In particular, the present invention relates to a robotic arrangement used by moving the end effector in a plane of movement oriented vertically, for applications, for example, such as laser etching for the decoration of surfaces, restoration, welding, thermal treatments, and inspection using video cameras.

### Technological background

Known to the art are robotic arrangements with parallel architecture actuated via cables, which comprise a frame and an end effector, specifically a mobile platform, which carries out a task or operation, moving according to two degrees of freedom, i.e., in a plane. These arrangements have a rectangular plane working space and present a redundant actuation; i.e., to control the machine, a number of actuators is used higher than the number of degrees of freedom that have to be controlled according to the operation to be performed.

By "cable parallel robot" is meant a machine constituted by a platform, which supports, for example, an end effector, moved via cables that are connected to a frame. The cables are connected to the platform in so-called distal points and to the frame in so-called proximal points. The length of the cables varies thanks to an actuation system, made up of a servo-controlled drum, also known as winch. According to the canons of parallel architecture, the mobile platform is connected to the frame by at least two kinematic chains, which are, in this case, cables. In effect, both the structure and the actuation of the machine comprise flexible and ultralight members, which can withstand very high tensional loads. The cables can moreover be easily wound on drums, and then be guided along their path by a system of pulleys.

The advantages of manipulators obtained as cable parallel robots as compared to classic parallel robots with rigid members derive from their mechanical structure. The use of flexible members makes it possible to provide very extensive strokes of the actuators given that these are determined by the variation of length of the cables, obtained by unwinding of a reel on the winch. It follows that the only limitation on the dimension of the working space lies in the capacity of the drum, i.e., in the amount of cable that it is able to hold. It is clear that only by varying the length of the cables is it possible to obtain working spaces of large dimensions, without altering the mechanical simplicity of the system.

From their simple architecture there derives a low cost, as compared to parallel robots with rigid members, and the possibility of transporting them easily and re-configuring them according to the working area, re-allocating the actuators and the appropriate cable transmission system. Moreover, the cables have a very small weight and at the same time a high tensile strength so that the ratio between payload and weight of the structure is high. The significant reduction of the inertias, due to the adoption of this type of actuation, enables the mobile platform to reach high speeds and accelerations, guaranteeing a dynamic performance that is not easy to obtain with classic parallel robots. The mobile platform can moreover be equipped with different types of end effectors. Hence, these are easily reconfigurable and versatile systems, which, for applications of large dimensions, provide a fast and economically advantageous solution.

However, so far their use in the industrial field is still limited. This is due to some problems introduced by the use of flexible transmission members. The cable is a unilateral constraint, capable of withstanding only tensile stresses. Hence, a platform constrained via cables is not generally able to withstand an arbitrary external force applied thereto. In addition, the visco-elastic nature of the cables causes yielding thereof under prolonged application of loads. This behaviour, which is markedly non-linear, complicates control of the machine and estimation of the effective length of the cables, and hence determination of positioning of the platform. These problems, due to adoption of cables, introduces various complications, which have repercussions on control, analysis, design, and production of the aforesaid manipulators. Typically, instead of using very complex control models, a standard model is used as reference, which follows the hypotheses of a multibody system with rigid members: the cables are considered as "distances" between points in space, the proximal point on the frame and the distal point on the platform. In this way, all the problems introduced by the non-linear behaviour of the cables are neglected, the cables being modelled simply as prismatic joints.

With these assumptions, many effects due to their use are neglected, as summarized below:
- unilateral constraint: the cables can only pull and not push the platform;
- elasticity of the cables: their length depends upon the load applied;
- weight of the cables: the cables tend to yield under their own weight, assuming a curved shape, which departs from the straight line of the model (in the case of very long cables, for robots of large dimensions, this effect is more marked);
- (longitudinal or transverse) vibrations of the cable: these cause an error on the length of the cable with respect to the length defined by the geometrical distance between the attachment points;
- winding of the cable on the drum: this generates on the cable phenomena of hysteresis, caused by variation of tension, which lead to lengthening of the cable; the effect is evident in soft cables, which, as they lie in the groove of the drum or the races of the pulleys, flatten out (the cross section of the cable is thus ovalized, and the winding radiuses vary);
- effect of temperature: the changes in temperature, of an environmental and mechanical nature (friction), cause the length of the cable to change;
- effect of sliding and hysteresis of the material: from the nature of the material there may derive phenomena of hysteresis, not linked to the tension applied; one of these phenomena, referred to as "cold creep", is favoured by aging of the cable;
- kinematic complexities of the winch and platform: the actual kinematic model renders problematical estimation of the effective length of the cables, which in actual fact have a variable orientation as they leave the drum and the points of attachment to the platform; and
- elastic reactions of the platform and frame: displacements and vibrations of the structure during service life introduce further errors in the measurement of the length of the cables.

Consequently, the standard or simplified model, but for some uncertainties, enables control of the aforesaid manipulators, and hence their use also in the industrial context. In fact, thanks to their particular properties, cable robots have found different fields of application: logistics, simulation of motion, building, production, metrology, entertainment, pick and place, etc. To reduce errors to the minimum, it is indispensable to provide an apparatus that is as adherent as possible to the simplified model so as to eliminate or reduce many critical aspects during control.

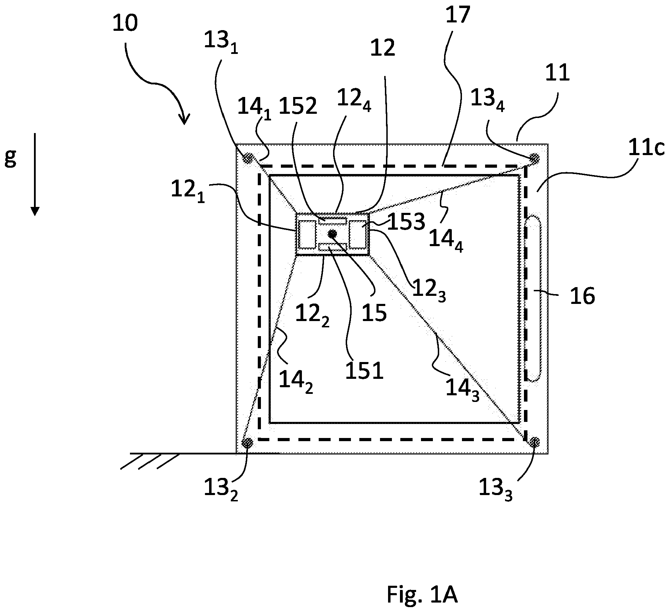

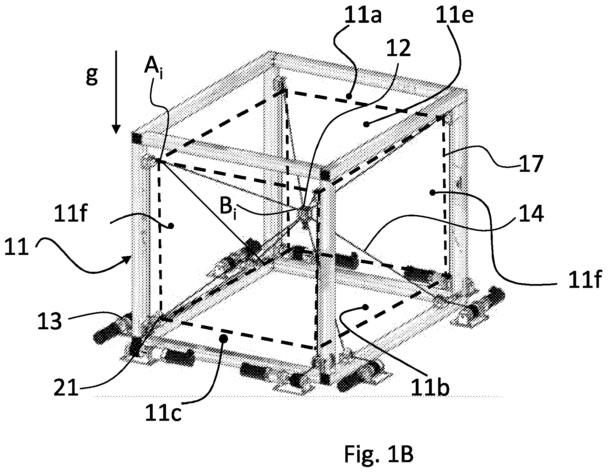

In greater detail, with reference to Figure 1A, represented schematically therein is in front side view of a robotic arrangement 10 of the parallel-architecture type actuated by means of cables, of a known type, hence comprising a frame 11, having a parallelepipedal shape, as illustrated in the perspective view of Figure 1B, each side or edge of the parallelepiped being obtained, in the example, via a metal sectional element. In Figure 1B it may be appreciated that the parallelepipedal frame 11 has six faces: a top face 11a, a bottom face 11b, and four side faces, namely the front face 11c, parallel to the working plane, illustrated in Figure 1A, the left-hand side face 11d, the rear side face 11e, and the right-hand side face 11f.

Arranged at the corners of the aforesaid rectangular frame 11 are respective four actuators 13, in particular 13₁, 13₂, 13₃, 13₄, which are, for example, motor-driven winders, or winches, which unwind and wind actuation cables 14, respectively 14₁, 14₂, 14₃, 14₄, the other end of which is fixed to a portion of a mobile support 12, respectively 12₁, 12₂, 12₃, 12₄, in the form of a rectangular mobile platform. This mobile support 12 comprises an end effector 15, in the example a laser source for etching surfaces. As has been said, in variant embodiments the laser source may have different powers and characteristics for carrying out other operations, or else there may be a video camera, or any other instrument suited to being moved by the robotic arrangement 10 described herein. The end effector 15 comprises, in the example, also a respective system for control of the laser source 151 and a Bluetooth communication module 152 for exchanging signals and for being in particular governed by a control module 16 located on the frame 11. Designated by 153 are power-supply batteries.

The space of movement of the end effector 15, designated by 17 in Figure 1A, is visible as a plane substantially parallel to the plane of the front face 11c of the frame 11 and defined by the strokes of the actuators 13, as well as being defined on the basis of its installation. The control module 16 and the actuators 13 are coupled to a power-supply system (not illustrated in the figures).

Represented in Figure 1B is a cable robotic arrangement of the same type as the arrangement 10 of Figure 1A, and it may be appreciated how, in this case, the frame 11 is a parallelepiped, with six faces consisting of a top face 11a, a bottom face 11b, and four side faces, namely, a front side face 11c, parallel to the working plane, illustrated in Figure 1A, a left-hand side face 11d, a rear side face 11e, and a right-hand side face 11f. Of course, the terms used for the faces refer to the configuration illustrated in Figures 1A-1B, given that the frame 11 has a parallelepipedal shape, as illustrated in 1B, where g indicates the direction of the acceleration of gravity, which enables definition of the vertical direction, the horizontal direction, and the top and bottom sides.

In Figure 1B the perspective view moreover makes it possible to appreciate how in this case in actual fact the plane 17 of movement is a parallelepipedal movement space 17 inside the parallelepiped defined by the frame 11, with faces parallel thereto, and once again defined by the strokes of the actuators 13 relative to each face or edge of the frame 11, in this case, as well as being defined on the basis of the installation.

Also the mobile support 12 is in the form of a horizontal mobile platform. It should be noted that in general the mobile platform does not need to be a plane support.

In particular, a robotic arrangement of the type described in Figures 1A, 1B is suited to industrial applications that do not envisage contact of the end effector with the surrounding environment, i.e., where the only external action exerted on the platform is gravity, for instance, laser etching for the decoration of surfaces, restoration, welding, thermal treatments, and inspection by means of video cameras. In addition, it has a rectangular plane working space, having a shape and size that may vary according to the installation. It is possible to scale the robotic arrangement, vary orientation of the working plane, and possibly render it portable, in a nimble and economically advantageous way thanks to the architecture and the logic of cable robots, without the need to redesign the actuation system.

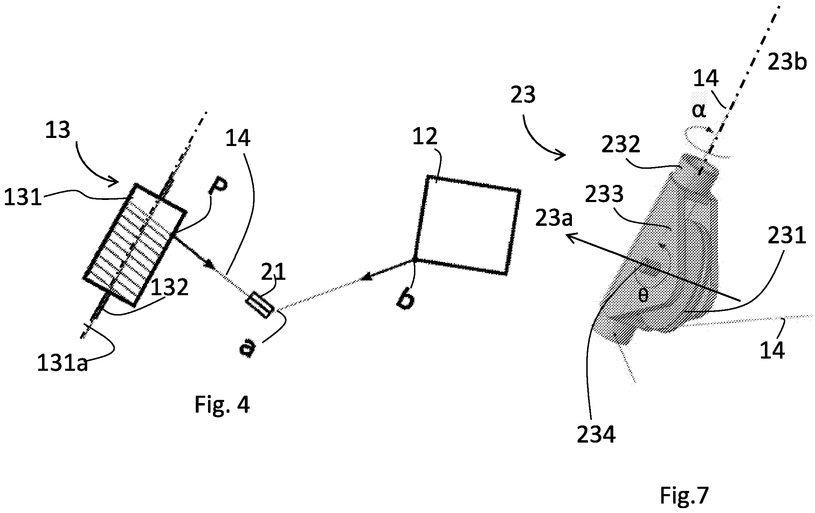

With reference to Figure 4, which represents an example of actuator 13, the actuators 13 that determine variation of the effective length of the actuation cables are preferably of a rotary type, for example, as illustrated, comprising a drum 131 that turns about an axis of rotation 131a, on and off which the cable 14 is wound and unwound, the drum 131 being driven by a servo-controlled electric motor 132. A system of this kind is commonly referred to as servo-controlled winch. Normally, each winch controls the length of a cable 14, which is guided along a path thereof P-a-b, from the drum 131, the point of exit of the cable therefrom being designated by P, to a distal anchorage point b on the platform 12, by one (or more) transmission pulleys 21 that identify a point a of transmission of the cable 14, or proximal anchorage point, towards the platform 12.

To ensure accurate winding, a single-layer drum is preferably chosen, with a cable-guiding system determined by a helical groove. Furthermore, to enable the point A of exit of the cable 14 to be defined, the drum is configured to translate on a guide system, in the direction of its axis, during rotation. This linear motion is obtained by transforming the rotary motion, thanks to a transmission system, for example via a trapezoidal screw or a ballscrew. Translation of the drum on the linear guides and its rotation about the screw, are synchronized by a single actuation. The pitch of the winch and the pitch of the screw have for this purpose to be the same , but for their manufacturing tolerances.

This facilitates modelling of the system, and hence its control.

Consequently, the robotic arrangement must in general be preferably configured to get the actuation cable 14 to exit at a fixed point, P, in space, for example via the translation of the drum in an axial direction during rotation described above. Then, the robotic arrangement, in order to be able to position the actuator at any point, even one not constrained to the frame, for example an ground, may envisage cable transmissions, such as the pulley 21, as far as the anchorage points, in the positions envisaged by the configuration of the robotic arrangement.

The pattern of motion of the end effector, defined according to the application, is that of a point in the plane; i.e., it has two translational degrees of freedom, and is also referred to as "2T". To provide a 2T pattern, three cables would be sufficient, i.e., m = n + 1, where m is the number of cables and n is the number of degrees of freedom of the end effector. In this way, however, the working space and the installation space would have a triangular shape, which cannot be adapted to the requirements of certain applications among the ones mentioned. Using four cables, the working space broadens, and can become a quadrilateral, and moreover the platform is more stable and easily controllable. For process specifications it is necessary to ensure that the end effector, mounted on the platform, moves always in one and the same plane; i.e., it is necessary to limit as far as possible any variation of the distance of the end effector from the working plane. For this reason, to suspended architectures, with horizontal working plane, which require another constraint that will physically impose the distance of the end effector from the working plane but at the same time will enable displacement of the platform in the plane (for example, equipping the platform with wheels), it is preferred to use a non-suspended configuration with vertical working plane and vertical plane of movement. This vertical architecture is also preferable in so far as it is suited to specific applications that require avoiding contact with the working plane during execution.

It is in any case necessary to constrain the platform to moving in a plane, which is possible also without the aid of other physical constraints, via arrangement of the actuation cables.

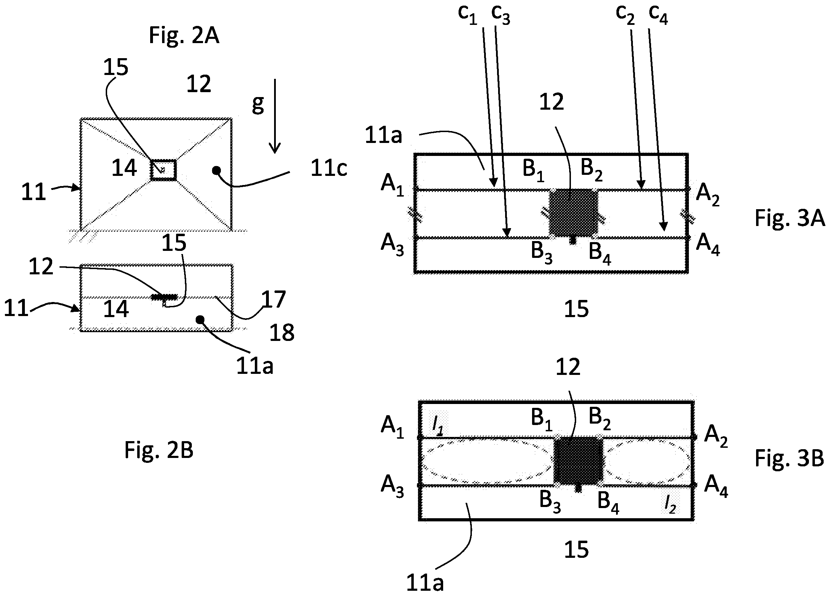

In this regard, illustrated in Figure 2A is a front side view of a robotic arrangement 10 that operates in vertical configuration, as indicated by the acceleration of gravity g, whereas in Figure 2B the robotic arrangement 10 is illustrated in top plan view, where it is possible to identify the plane of movement 17 parallel to a working plane 18 and parallel to the front face 11c.

With the above vertical configuration it is possible to envisage use of eight cables, which form, two by two, articulated parallelograms together with a respective side of the frame and a respective side of the platform. This prearrangement constrains the platform to move, nominally, in a plane: each pair of cables, in fact, comes under one and the same actuator, and is hence subject to one and the same variation of length. In practice, the lengths of the two cables remain the same. But what defines the parallelograms, and causes the two flexible members to remain parallel during motion of the platform, is the definition of the points of anchorage, to the platform and to the frame, which have to be equidistant; i.e., in one and the same parallelogram (for example, *l₁* or *l₂* in Figure 3B), the distance between two proximal anchorage points on the side of the frame must be equal to that between two distal anchorage points on the platform.

Illustrated in top plan view in Figure 3A is an eight-cable configuration, where designated by c₁, c₂, c₃, c₄ are four of the actuation cables 14 visible from above through the top face 11a, the other four not being visible. Since the distance between the points of attachment of the cables (for example, the distances A₁A₃ or B₁B₃) that represent two sides of a parallelogram, where the other two sides are the cables (for example c₁ and c₃), does not vary in time, the cables are forced to lie in parallel planes. The distal anchorage points B₁, B₂, B₃, B₄ or distal points Bᵢ are hence located on the edges of the platform 12, whereas the corresponding proximal anchorage points A₁, A₂, A₃, A₄ or anchorage points Ai are arranged on two opposite sides of the face of the frame 11 parallel to the plane of movement 17, in the example the top face 11a, in positions determined by the parallelism of the cables 14, i.e., as has been said, equidistant. Even though this solution constrains the platform 12 to moving in a plane, it does not guarantee that both of the cables belonging to a parallelogram, controlled by one and the same motor, will be in tension.

This problem is overcome with the configuration of Figure 3B, the structure of the robotic arrangement, or manipulator, remaining completely unvaried, and only the two cables of each parallelogram being replaced by just one cable that, forming a loop path *l₁* or *l₂*, respectively, is anchored on the frame 11 and on the platform 12 at the same points A₁, A₂, A₃, A₄ and B₁, B₂, B₃, B₄ of the previous configuration, in an equidistant way. In the same way, the number of cables could further be reduced to two.

The flexibility of the solution of Figure 3B is due to the setting of the system of transmission of the cables, which, from the points of attachment on the frame to the points of attachment on the platform, defines the path (i.e., routing) of the cables in the working space.

There remains, however, the problem of defining the elements of the robotic system so as to enable a better implementation of the standard or simplified model.

Prior art documents DE 10 2010 015530 A1, WO2019/241690 A1 and the publication by Klaus Werner et al. "Pulley friction compensation for winch-integrated cable force measurement and verification on a cabledriven parallel robot", 2015 IEEE INTERNATIONAL CONFERENCE ON ROBOTICS AND AUTOMATION (ICRA). IEEE, 26 May 2015, pages 1627-1632 describe robotic arrangements which are relevant to the technological background of embodiments of the solution here described. In particular, DE 10 2010 015530 discloses a planar cabledriven parallel robot whose actuation cables form loops, and whose distal transmission groups comprise articulated pulleys comprising a first pulley rotation axis parallel to the movement plane and a second rotation axis, about which said first rotation axis rotates, perpendicular to the movement plane.

### Object and summary

The object of the embodiments described herein is to improve the apparatuses and processes according to the prior art as discussed previously.

Various embodiments achieve the above object thanks to a robotic arrangement having the characteristics recalled in the ensuing claims.

The claims form an integral part of the technical teachings provided herein in relation to the invention.

In particular, the solution described herein relates to a parallel-architecture robotic arrangement, comprising a frame and an end effector mounted on a mobile support, in particular a mobile platform,
said mobile support being connected to said frame via a plurality of actuation cables, in particular four actuation cables, in such a way as to move according to two degrees of freedom in a rectangular plane movement space,
said robotic arrangement comprising a plurality of actuators for moving respective actuation cables, these actuators being in a number greater than said degrees of freedom of the end effector,
each actuation cable coupling a respective portion of said frame and a respective portion of said mobile support according to a loop path between at least two proximal anchorage points associated to said portion of the frame and two distal anchorage points associated to said respective portion of the support,
wherein said robotic arrangement comprises for each loop a proximal transmission assembly positioned on the frame downstream of each actuator with respect to the path of the cable, and a distal transmission assembly positioned on the mobile support of the end effector,
each one between said proximal transmission assembly and said distal transmission assembly comprising, at the respective anchorage points articulated pulleys, which each have a first axis of rotation of the respective pulley, in particular of a rotating disk thereof, that is parallel to the plane of movement, and a second axis of rotation, about which said first axis of rotation turns, that is perpendicular to the plane of movement, the exit point of the actuation cable on each pulley identifying the respective anchorage point,
said proximal transmission assembly being associated to a sensor configured to measure the tension of the respective actuation cable.

In variant embodiments, said sensor assembly comprises a load cell configured to measure a load acting on the actuation cable that passes over a pulley of the proximal transmission assembly.

In variant embodiments, said sensor assembly is configured in such a way that said acting load is set in a direction normal to the axis of the load cell.

In variant embodiments, said proximal assembly comprises two articulated pulleys, the exit points of which represent the proximal anchorage points of the actuation cable arranged in a loop, and two fixed pulleys associated in a fixed way to the frame, which are set on the path of the actuation cable between the respective actuator and the respective articulated pulley.

In variant embodiments, said distal assembly comprises respective articulated pulleys, the exit points of which represent the distal anchorage points of the actuation cable arranged in a loop, one of said two articulated pulleys transmitting said actuation cable to the other.

In variant embodiments, said actuators are associated to the frame, in particular in the proximity of the respective proximal assembly.

In variant embodiments, associated to each actuation-cable loop is just one actuator; in particular, the ends of the actuation cable are associated to the drum of a servo-controlled winch.

In variant embodiments, the two proximal anchorage points are associated to a respective portion of the frame, and two distal anchorage points are associated to a respective portion of the support in an equidistant way.

In variant embodiments, the set of proximal anchorage points associated to a respective portion of the frame identifies a parallelepiped of the frame, and the set of distal anchorage points associated to a respective portion of the support identifies a respective parallelepiped of the support comprised in the parallelepiped of the frame.

### Brief description of the drawings

Various embodiments will now be described, purely by way of example, with reference to the annexed drawings, wherein:
- Figures 1 to 4 have already been described previously;
- Figure 5 shows a robotic arrangement according to the invention in schematic front view;
- Figure 6 shows a robotic arrangement according to the invention in schematic top plan view;
- Figure 7 is a perspective view of a pulley of the robotic arrangement according to the invention;
- Figure 8 and Figure 9 are perspective views of a distal assembly and of a proximal assembly, respectively, of the robotic arrangement according to the invention;
- Figure 10 shows a schematic view of a sensor arrangement in the robotic arrangement according to the invention; and
- Figure 11 shows a robotic arrangement according to the invention in perspective view.

### Detailed description

In the ensuing description, numerous specific details are provided in order to enable maximum understanding of the embodiments described by way of example. The embodiments may be implemented with or without specific details, or else with other methods, components, materials, etc. In other circumstances, well-known structures, materials, or operations are not illustrated or described in detail so that aspects of the embodiments will not be obscured. Reference, in the course of the present description, to "an embodiment" or "one embodiment" means that a particular feature, structure, or characteristic described in relation to the embodiment is comprised in at least one embodiment. Hence, the phrase "in an embodiment" or "in one embodiment" in various points of the present description does not necessarily refer to one and the same embodiment. Moreover, the particular details, structures, or characteristics may be combined in any convenient way in one or more embodiments.

The notations and references used are provided herein only for convenience of the reader and do not define the scope or meaning of the embodiments.

It has been noted that the cable-guide system, for example the transmission pulley, is independent of the actuation system, in so far as the two parts may be combined together, without particular restrictive conditions.

The solution described herein is hence configured so that the mechanical components of the guide system that define the path of the cables, between the frame and the platform, will enable the cable to deflect in a wide range of directions, and at the same time define kinematically the proximal and distal points of attachment Aᵢ and Bᵢ, where i = 1, ..., m, m denoting the number of cables or loops, so that they will be fixed in space, during any movement.

In this regard, the solution described herein substantially envisages that, in the context of a cable robotic arrangement of a redundant type, with vertical orientation, which uses loop cable paths, as illustrated in Figure 3, the guide system will comprise articulated pulleys, configured to rotate the plane of the pulley about an axis perpendicular to the plane of movement of the support of the end effector, and will moreover comprise a force sensor for detecting the force applied to the cables of each loop.

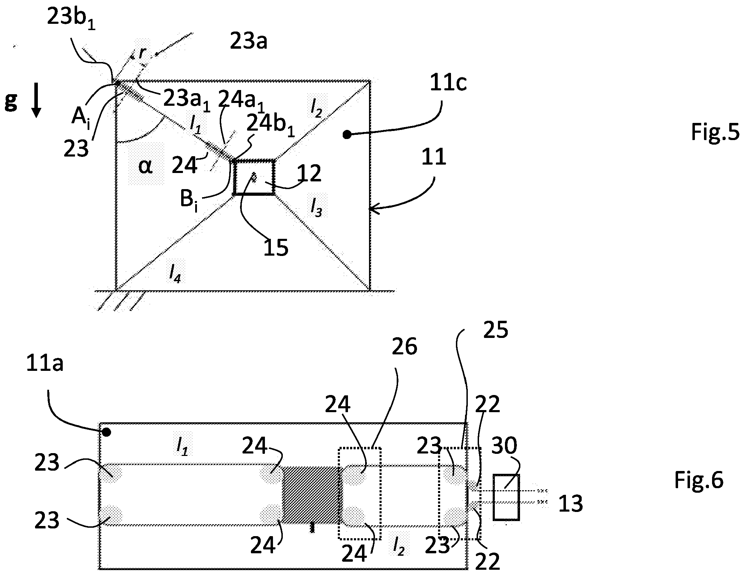

Figure 5 illustrates a robotic arrangement 10' according to the invention, in schematic front side view. In Figure 6, the robotic arrangement 10' is illustrated in schematic top plan view.

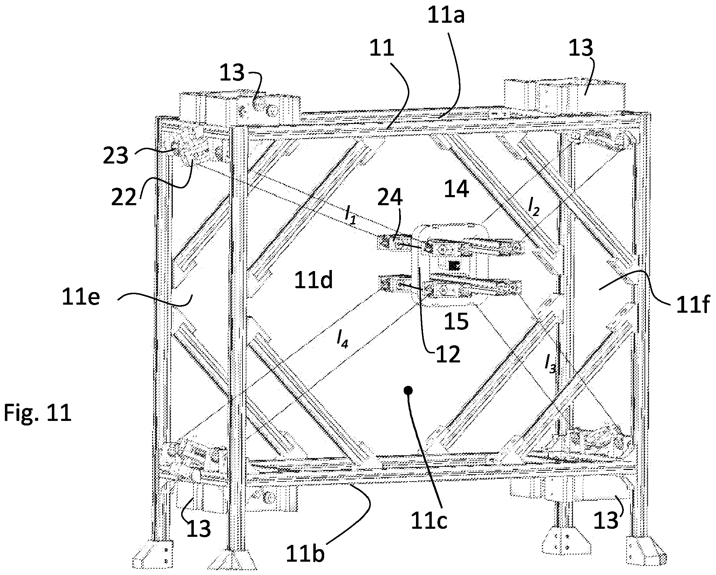

With reference to Figures 5 and 6, the robotic arrangement 10' has a configuration like the one of Figure 3A. Hence, the robotic arrangement 11 has the substantially parallelepipedal frame 11, as may be seen more clearly in the perspective view of Figure 11, which comprises within it the support 12, while four actuation cables 14 are provided, which couple the facing sides of the frame 11 and of the support 12, each forming a respective loop or parallelogram l₁, l₂, l₃, l₄.

It should be noted that, in the configuration of Figures 5 and 6, in general the distal anchorage points in turn identify a parallelepiped with faces parallel to the movement space 17.

More in general, the frame 11 does not need to have a parallepipedal shape, but must be such as to make possible an arrangement of proximal points of a parallepipedal shape.

As regards entry of the cable 14 into the working space 17 within the frame 11, the solution described comprises articulated or mobile pulleys 23, which are described in greater detail in what follows with reference to Figure 7. These articulated or mobile pulleys 23 reduce considerably the wear of the cable for deflections having components in the direction of the articulated joint, even though they introduce a complexity in the kinematic model. As illustrated in Figure 7, which represents an articulated pulley 23 in schematic perspective view, the aforesaid articulated pulley 23 comprises a rotating disk 231 of its own that turns about an axis of rotation 23a. The articulated pulley 23 further comprises a hollow tubular support 232, having a respective main longitudinal axis that identifies a second axis of rotation 23b, and is associated to cantilever supports 233 for carrying the pins of rotation of the rotating disk 231. Hence, the second axis of rotation 23b is perpendicular to the axis of the pulley proper, i.e., the axis 23a, and coaxial with the direction of the incoming cable 14, which is introduced through the hollow support 232. Consequently, the articulated pulley 23 can turn through an angle of attachment α about the second axis of rotation 23b, also the first axis of rotation 23a of the pulley turning through the same angle, and hence also the direction of the cable 14 that exits towards the support 12 turning through the same angle. This system enables orientation of the cable in a wide range of directions.

In the robotic arrangement 10', the second axis of rotation 23b is perpendicular to the plane of movement 17, which substantially coincides with the side of the frame to which the pulley 23 is fixed, so that the plane of the rotating disk 231 of the articulated pulley 23 turns according to an axis perpendicular to the plane of movement 17 through the angle of attachment α.

Hence, the robotic arrangement 10' in the proximal anchorage points Aᵢ on the frame 11 comprises respective articulated pulleys 23 that receive the cable 14 from actuators 13. The proximal anchorage points in this case are located along the side of the frame 11 at the same distance as the points of Figure 3B; however, they are shifted by a distance equal to the radius r of the articulated pulley 23 in the direction of the cable 14.

It should be noted that the proximal anchorage points Aᵢ and distal anchorage points Bᵢ in the solution described here are defined as virtual points identified by the intersection between the second axes of rotation of the mobile pulleys, the proximal ones 23 and the distal ones 24 respectively, and the planes passing through the cables *li* and parallel to the working plane 17. In other words, given a vertical working plane, for example parallel to the front face 11c, having defined a plane that passes through the i-th cable *lᵢ,* considered as a line without thickness, and is parallel to the aforesaid vertical working plane, and having denoted the axes of articulation of the proximal pulleys 23 and distal pulleys 24 as 23bi and 24bi, the (virtual) proximal points Ai and distal points Bᵢ are identified by the intersection of the axes 23bi and 24bi with the aforesaid plane passing through an i-th cable *li* parallel to the aforesaid vertical working plane.

The actuators 13 are not visible either in Figure 5 or in Figure 6, but are in general located, for example, on the outer part of the frame 11, as illustrated for example in Figure 11, described in what follows. In the example, associated to each loop *li* of the actuation cable 14 is just one actuator 13, the ends of the actuation cable 14 being associated to the drum 131 of a servo-controlled winch, as illustrated in Figure 4. This embodiment is preferable, but in variant embodiments there may be two actuators for each end of the actuation cable 14 that forms the loop *li.*

Likewise located at the points of attachment Bᵢ of the cables on the platform 12 are respective articulated pulleys 24, similar as regards their arrangement and characteristics to the pulleys 23; i.e., the second axis of rotation is parallel to the side of the platform 12, and also the plane of the rotating disk of the articulated pulley 24 turns according to an axis perpendicular to the plane of movement 17 through the angle of attachment α. These articulated pulleys 24 hence make it possible to maintain the standard kinematic model defined, leaving to the cable 14 the possibility of deflecting freely, with a wide range of angles α of attachment and so that the cable can transmit force to another element of the robotic arrangement 10'. In addition, the cableplatform connection must be able to withstand forces acting in different directions.

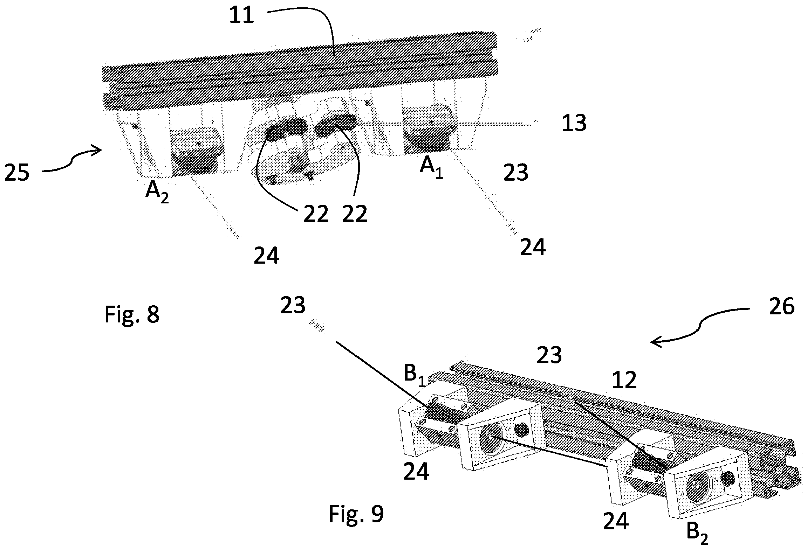

For the robotic arrangement 10' described here, a guide system is necessary that will enable the cables 14 to follow the loop path *lᵢ*. At the same time, there remains the need to define kinematically the proximal points Aᵢ and distal points Bᵢ, to facilitate modelling. Hence, the robotic arrangement 10' as illustrated in Figure 8, comprises a proximal assembly 25, represented in perspective view; i.e., the assembly for transmission of the cable 14 from the actuator 13, at a pair of proximal points of a loop, in the example A₁ and A₂ of the loop *l₁*, gathers the cable 14 leaving the drum 131 of the actuator 13 with a fixed pulley 22, mounted with axis normal to the plane in which the cables 14 lie, and transmits it immediately to the mobile pulley 23, the articulated axis 23b of which lies perpendicular to the plane of movement 17. In this way, the proximal point Ai of the cable 14, corresponding to the exit point on the articulated pulley 23, is defined by the position of the articulated axis or second axis of rotation 23b, fixed with respect to the frame 11.

The hypothesis of pointlike exit of the cable is satisfied, and the standard model can be applied: to determine the length of the cable, once the angle of attachment αᵢ of each loop lᵢ has been measured, it is possible to use a trigonometric formula to calculate the length as vector sum of distal and proximal positions. For instance, if the position of B' is known, which is the generic distal point with respect to the generic point Q of the platform 12 (according to design), and the position of A is known, which is the proximal point, in the plane, once the angle α of deflection of the aforesaid cable is known, for example *l₁* in Figure 5, we obtain B = Q + B', which is the position of the distal point from the frame 11. The position of the generic point Q is assigned by the task performed. At this point, the length of the cable is given by 1 = A + B (vector sum).

The same technique, as has been said, can be implemented for the distal points of attachment Bᵢ, by arranging on the platform articulated pulleys 24, in which the cable is guided and then returns to the drum, where it is rewound, as illustrated in greater detail in Figure 9, which represents a distal assembly 26, i.e., the assembly for transmission of the cable 14 coming from the distal assembly 25. This system guarantees applicability of the simplified control model, and maintenance of tensioning in the loops of the individual cables. In practice, two transmission assemblies are defined: the proximal one 25, located on the frame 11, preferably alongside the actuator 13, and the distal one, positioned on the platform 12.

The cable-guide system is hence integrated with the sensors necessary for control of the machine. The most common strategies of control of cable robots require measurements to be carried out on the system during its operation in order to improve the performance of the robot. The solution described comprises a force sensor, specifically a load cell, to determine the tension of the cable and hence the forces applied to the platform 12 and to the end effector 15.

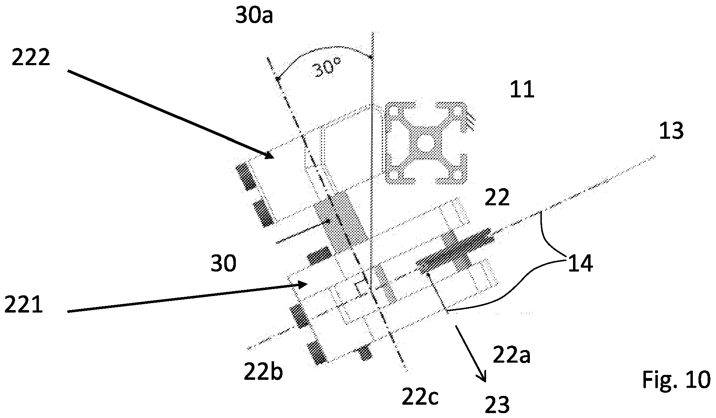

Illustrated schematically in Figure 6 is a sensor assembly 30 that is associated to the fixed pulleys 22 for measuring the tension of the cables actuated by the actuator 13. In Figure 10 the aforesaid sensor assembly 30 is described in greater detail, and it may be noted that, given a direction of loading 22b coaxial with the direction of the cable 14 coming from the actuator 13 and in the plane of the rotating disk of the fixed pulley 22, the fixed pulley 22 comprises, in addition to a body 221 in which the rotating disk turns, a second body 222 associated to the frame 11, between which bodies the sensor 30, i.e., the load cell, is set. The load cell used for measuring the tension of the cable 14 is preferably a strain-gauge load cell. The overall support formed by the bodies 221 and 222 between which the sensor 30 is set has an axis 22c, which is perpendicular to the direction of loading and forms a certain angle, e.g., 30°, with the plane of the frame 11. In this configuration, the load cell is directly connected to a pulley present in the system, without any need for additional devices.

It should be noted that, in the solution described here, the fixed pulley and the mobile pulley have two different purposes, respectively, measurement of the average tension in the cable branch, via a load cell connected thereto, and orientation of the cable within the working space.

The cable hence departs from the drum 131 always from the same position, and is sent to the sensorized pulley 22. This solution is particularly economical in so far as it enables use of a minimal number of components. The sensor 30, provided with two pairs of threaded holes for constraint to the frame 11 on one side, through the body 222, and the anchorage of the load on the other side (body 221), is positioned within the system of fixed pulleys 22, which gathers the cable leaving the drum 13. The sensor assembly 30 is thus configured in such a way that the acting load is oriented in a direction normal to the axis of the load cell, i.e., the axis 22c.

Thanks to this configuration and to the loop of the cables, it is possible to determine the average tension of the entire cable segment since the two distinct branches of the loop *lᵢ* could be subject to different tensions on account of the friction on the pulleys.

It is then clear that, albeit not illustrated in the figures, the robotic arrangement 10' comprises a control system, for example a microprocessor control system, which is coupled in communication with the servo-controlled actuators and receives the measurements of tension of the cables from the sensor 30, and which preferably implements a standard control model, which follows the hypotheses of a multibody system with rigid members: the cables are considered as "distances" between points in space, the proximal point on the frame and the distal point on the platform. In this way, all the problems introduced by the non-linear behaviour of the cables are neglected and they are simply modelled as prismatic joints.

As regards the cells, by carrying out a simple kinematic control on the actuators there is a risk of overloading due to the lack of knowledge of the deformation of the cables, which pull each other: this is, in practice, a safety feature. In general, the fact that it is possible to measure the torque of the motors (with costly servo-axes) does not in any case guarantee the knowledge of the tension of the cables in the case of low or zero speeds (i.e., when the machine stops or changes direction).

Hence, from the foregoing description the solution described and the corresponding advantages emerge clearly.

The apparatus according to the invention advantageously makes it possible to apply the standard model for control once also a the value of average tension of the entire segment of actuation cable of a loop to be entered in the control model is known.

Of course, without prejudice to the principle of the invention, the details and the embodiments may vary, even significantly, with respect to what has been described herein purely by way of example, without thereby departing from the sphere of protection of the invention, which is defined by the annexed claims.

## Claims

1. A robotic arrangement with parallel architecture, comprising a frame (11) and an end effector (15) mounted on a mobile support (12), in particular a mobile platform,
said mobile support (12) being connected to said frame (11) via a plurality of actuation cables (14), in particular four actuation cables, in such a way as to move according to two degrees of freedom in a plane rectangular movement space (17),
said robotic arrangement (10) comprising a plurality of actuators (13) for moving respective actuation cables (14), said actuators (13) being in a number greater than said degrees of freedom of the end effector (15),
each actuation cable (14) coupling a respective portion of said frame (11) and a respective portion of said mobile support (12) according to a loop path (*lᵢ*) between at least two proximal anchorage points (Aᵢ) associated to said portion of the frame (11) and two distal anchorage points (Bᵢ) associated to said respective portion of the support (12),
wherein said robotic arrangement (10) comprises for each loop (*lᵢ*) a proximal transmission assembly (25) positioned on the frame (11) downstream of each actuator (13) with respect to the path of the cable (14), and a distal transmission assembly (26) positioned on the mobile support (12) of the end effector (15),
each one between said proximal transmission assembly (25) and said distal transmission assembly (26) comprising, at the respective anchorage points (Aᵢ, Bᵢ) articulated pulleys (23, 24), which each have a first axis of rotation (23a, 24a) of the respective pulley, in particular of a rotating disk thereof (231), that is parallel to the plane rectangular movement space (17), and a second axis of rotation (23b), about which said first axis of rotation (23a) turns, that is perpendicular to the plane rectangular movement space (17), the exit point of the actuation cable (14) on each pulley (23, 24) identifying the respective anchorage point (Ai, Bᵢ),
said proximal transmission assembly (25) being associated to a sensor (30) configured to measure the tension of the respective actuation cable (14).

2. The arrangement according to claim 1, **characterized in that** said sensor assembly (30) comprises a load cell configured to measure a load acting on the actuation cable (14) that passes over a further pulley (22) of the proximal transmission assembly (25).

3. The arrangement according to claim 2, **characterized in that** said sensor assembly (30) is configured in such a way that said acting load is set in a direction normal to the load axis (22c) of the load cell (30).

4. The arrangement according to claim 1, **characterized in that** said proximal assembly (25) comprises two articulated pulleys (24), the exit points of which represent the proximal anchorage points (Ai) of the actuation cable (14) arranged in a loop, and two fixed pulleys (22) associated in a fixed way to the frame (11), set on the path of the actuation cable (14) between the respective actuator (13) and the respective articulated pulley (24).

5. The arrangement according to claim 4, **characterized in that** said distal assembly (26) comprises respective articulated pulleys (24), the exit points of which represent the distal anchorage points (Bi) of the actuation cable (14) arranged in a loop, one of said two articulated pulleys transmitting to the other said actuation cable (14).

6. The arrangement according to any one of the preceding claims, **characterized in that** said actuators (13) are associated to the frame (11), in particular in the proximity of the respective proximal assembly (25).

7. The arrangement according to any one of the preceding claims, **characterized in that** just one actuator (13) is associated to each actuation-cable loop; in particular, the ends of the actuation cable (14) are associated to the drum (131) of a servo-controlled winch.

8. The arrangement according to any one of the preceding claims, **characterized in that** the two proximal anchorage points (Ai) are associated to a respective portion of the frame (11), and the two distal anchorage points (Bi) are associated to a respective portion of the support (12) in an equidistant way.

9. The arrangement according to any one of the preceding claims, **characterized in that** the set of proximal anchorage points (Ai) associated to a respective portion of the frame (11) identifies a parallelepiped of the frame, and the set of distal anchorage points (Bi) associated to a respective portion of the support (12) identifies a respective parallelepiped of the support comprised in the parallelepiped of the frame (11).

## Patentansprüche

1. Roboteranordnung mit paralleler Architektur, umfassend einen Rahmen (11) und einen Endeffektor (15), der auf einem mobilen Träger (12), insbesondere einer mobilen Plattform, montiert ist,
wobei der mobile Träger (12) mit dem Rahmen (11) über eine Vielzahl von Betätigungskabeln (14), insbesondere vier Betätigungskabel, so verbunden ist, dass dieser sich gemäß zwei Freiheitsgraden in einem ebenen rechteckigen Bewegungsraum (17) bewegt,
wobei die Roboteranordnung (10) eine Vielzahl von Aktuatoren (13) zum Bewegen jeweiliger Betätigungskabel (14) umfasst, wobei die Anzahl der Aktuatoren (13) größer als die Freiheitsgrade des Endeffektors (15) ist,
wobei jedes Betätigungskabel (14) einen entsprechenden Abschnitt des Rahmens (11) und einen entsprechenden Abschnitt des mobilen Trägers (12) gemäß einem Schleifenweg (Iᵢ) zwischen zumindest zwei proximalen dem Abschnitt des Rahmens (11) zugeordneten Ankerpunkten (Aₗ) und zwei distalen dem jeweiligen Abschnitt des Trägers (12) zugeordneten Ankerpunkten (Bᵢ) koppelt,
wobei die Roboteranordnung (10) für jede Schleife (Iᵢ) eine proximale Übertragungsbaugruppe (25) umfasst, die an dem Rahmen (11) stromabwärts jedes Aktuators (13) in Bezug auf den Weg des Kabels (14) positioniert ist, und eine distale Übertragungsbaugruppe (26) umfasst, die auf dem mobilen Träger (12) des Endeffektors (15) positioniert ist,
wobei jede zwischen der proximalen Übertragungsbaugruppe (25) und der distalen Übertragungsbaugruppe (26) an den jeweiligen Ankerpunkten (Aᵢ, Bᵢ) Gelenkrollen (23, 24) umfassen, die jeweils eine erste Drehachse (23a, 24a) der jeweiligen Rolle aufweisen, insbesondere einer rotierenden Scheibe davon (231), die parallel zu dem ebenen rechteckigen Bewegungsraum (17) ist, und eine zweite Drehachse (23b) aufweisen, um welche die erste Drehachse (23a) sich dreht, die senkrecht zu dem ebenen rechteckigen Bewegungsraum (17) ist, wobei der Austrittspunkt des Betätigungskabels (14) an jeder Rolle (23, 24) den jeweiligen Ankerpunkt (Aᵢ, Bᵢ) kennzeichnet,
wobei die proximale Übertragungsbaugruppe (25) einem Sensor (30) zugeordnet ist, der ausgebildet ist, die Spannung des jeweiligen Betätigungskabels (14) zu messen.

2. Anordnung nach Anspruch 1, **dadurch gekennzeichnet, dass** die Sensoranordnung (30) eine Lastzelle umfasst, die ausgebildet ist, eine Last zu messen, die auf das Betätigungskabel (14) wirkt, das über eine weitere Rolle (22) der proximalen Übertragungsbaugruppe (25) läuft.

3. Anordnung nach Anspruch 2, **dadurch gekennzeichnet, dass** die Sensoranordnung (30) so ausgebildet ist, dass die wirkende Last in einer Richtung normal zu der Lastachse (22c) der Lastzelle (30) eingestellt ist.

4. Anordnung nach Anspruch 1, **dadurch gekennzeichnet, dass** die proximale Baugruppe (25) zwei Gelenkrollen (24) umfasst, deren Austrittspunkte die proximalen Ankerpunkte des in einer Schleife angeordneten Betätigungskabels (14) darstellen, und zwei feste Rollen (22) umfasst, die fest dem Rahmen (11) zugeordnet sind und auf dem Weg des Betätigungskabels (14) zwischen dem jeweiligen Aktuator (13) und der jeweiligen Gelenkrolle (24) angeordnet sind.

5. Anordnung nach Anspruch 4, **dadurch gekennzeichnet, dass** die distale Baugruppe (26) jeweilige Gelenkrollen (24) umfasst, deren Ausgangspunkte die distalen Ankerpunkte (Bᵢ) des in einer Schleife angeordneten Betätigungskabels (14) darstellen, wobei eine der beiden Gelenkrollen das Betätigungskabel (14) auf die andere überträgt.

6. Anordnung nach einem der vorhergehenden Ansprüche, **dadurch gekennzeichnet, dass** die Aktuatoren (13) dem Rahmen (11) zugeordnet sind, insbesondere in der Nähe der jeweiligen proximalen Baugruppe (25).

7. Anordnung nach einem der vorhergehenden Ansprüche, **dadurch gekennzeichnet, dass** nur ein Aktuator (13) jeder Betätigungskabelschleife zugeordnet ist, wobei insbesondere die Enden des Betätigungskabels (14) der Trommel (131) einer servogesteuerten Winde zugeordnet sind.

8. Anordnung nach einem der vorhergehenden Ansprüche, **dadurch gekennzeichnet, dass** die beiden proximalen Ankerpunkte einem jeweiligen Abschnitt des Rahmens (11) zugeordnet sind, und dass die beiden distalen Ankerpunkte (Bᵢ) einem jeweiligen Abschnitt des Trägers (12) in gleichem Abstand zugeordnet sind.

9. Anordnung nach einem der vorhergehenden Ansprüche, **dadurch gekennzeichnet, dass** die Menge der proximalen Ankerpunkte (Aᵢ), die einem jeweiligen Abschnitt des Rahmens (11) zugeordnet sind, ein Parallelepiped des Rahmens kennzeichnet, und dass die Menge der distalen Ankerpunkte (Bᵢ), die einem jeweiligen Abschnitt des Trägers (12) zugeordnet sind, ein entsprechendes Parallelepiped des Trägers kennzeichnet, das in dem Parallelepiped des Rahmens (11) umfasst ist.

## Revendications

1. Agencement robotique à architecture parallèle, comprenant un cadre (11) et un effecteur d'extrémité (15) monté sur un support mobile (12), en particulier une plateforme mobile,
ledit support mobile (12) étant relié audit cadre (12) par l'intermédiaire d'une pluralité de câbles d'actionnement (14), en particulier quatre câbles d'actionnement, de manière à se déplacer selon deux degrés de liberté dans un espace de déplacement plan rectangulaire (17),
ledit agencement robotique (10) comprenant une pluralité d'actionneurs (13) pour déplacer des câbles d'actionnement respectifs (14), lesdits actionneurs (13) étant en un nombre supérieur auxdits degrés de liberté de l'effecteur d'extrémité (15),
chaque câble d'actionnement (14) couplant une partie respective dudit cadre (11) et une partie respective dudit support mobile (12) selon un trajet en boucle (Iᵢ) entre au moins deux points d'ancrage proximaux (Ai) associés à ladite partie du cadre (11) et deux points d'ancrage distaux (Bi) associés à ladite partie respective du support (12),
dans lequel ledit agencement robotique (10) comprend pour chaque boucle (Iᵢ) un ensemble de transmission proximal (25) positionné sur le cadre (11) en aval de chaque actionneur (13) par rapport au trajet du câble (14), et un ensemble de transmission distal (26) positionné sur le support mobile (12) de l'effecteur d'extrémité (15),
chacun parmi ledit ensemble de transmission proximal (25) et ledit ensemble de transmission distal (26) comprenant, au niveau des points d'ancrage respectifs (Aᵢ, Bᵢ) des poulies articulées (23, 24), qui présentent chacune un premier axe de rotation (23a, 24a) de la poulie respective, en particulier d'un disque rotatif de celle-ci (231), qui est parallèle à l'espace de déplacement plan rectangulaire (17), et un deuxième axe de rotation (23b), autour duquel ledit premier axe de rotation (23a) tourne, qui est perpendiculaire à l'espace de déplacement plan rectangulaire (17), le point de sortie du câble d'actionnement (14) sur chaque poulie (23, 24) identifiant le point d'ancrage respectif (Aᵢ, Bᵢ),
ledit ensemble de transmission proximal (25) étant associé à un capteur (30) configuré pour mesurer la tension du câble d'actionnement respectif (14).

2. Agencement selon la revendication 1, **caractérisé en ce que** ledit ensemble capteur (30) comprend une cellule de charge configurée pour mesurer une charge agissant sur le câble d'actionnement (14) qui passe sur une poulie supplémentaire (22) de l'ensemble de transmission proximal (26).

3. Agencement selon la revendication 2, **caractérisé en ce que** ledit ensemble capteur (30) est configuré de telle sorte que ladite charge appliquée est réglée dans une direction perpendiculaire à l'axe de charge (22c) de la cellule de charge (30).

4. Agencement selon la revendication 1, **caractérisé en ce que** ledit ensemble proximal (25) comprend deux poulies articulées (24), dont les points de sortie représentent les points d'ancrage proximaux (Ai) du câble d'actionnement (14) disposé en boucle, et deux poulies fixes (22) associées de manière fixe au cadre (11), réglées sur le trajet du câble d'actionnement (14) entre l'actionneur respectif (13) et la poulie articulée respective (24).

5. Agencement selon la revendication 4, **caractérisé en ce que** ledit ensemble distal (26) comprend des poulies articulées respectives (24), dont les points de sortie représentent les points d'ancrage distaux (Bi) du câble d'actionnement (14) disposé en boucle, l'une desdites deux poulies articulées transmettant à l'autre ledit câble d'actionnement (14).

6. Agencement selon l'une quelconque des revendications précédentes, **caractérisé en ce que** lesdits actionneurs (13) sont associés au cadre (11), en particulier à proximité de l'ensemble proximal respectif (26).

7. Agencement selon l'une quelconque des revendications précédentes, **caractérisé en ce qu'**un seul actionneur (13) est associé à chaque boucle de câble d'actionnement, les extrémités du câble d'actionnement (14) sont associées au tambour (131) d'un treuil asservi.

8. Agencement selon l'une quelconque des revendications précédentes, **caractérisé en ce que** les deux points d'ancrage proximaux (Aᵢ) sont associés à une partie respective du cadre (11), et les deux points d'ancrage distaux (Bᵢ) sont associés à une partie respective du support (11) de manière équidistante.

9. Agencement selon l'une quelconque des revendications précédentes, **caractérisé en ce que** l'ensemble de points d'ancrage proximaux (Aᵢ) associé à une partie respective du cadre (11) identifie un parallélépipède du cadre, et l'ensemble de points d'ancrage distaux (Bᵢ) associé à une partie respective du support (12) identifie un parallélépipède respectif du support compris dans le parallélépipède du cadre (11).
